# EUROPEAN PATENT APPLICATION

(11) **EP 1 408 266 A1**
(43) Date of publication of application: **14.04.2004**
(21) Application number: 03022680.7
(22) Date of filing: 07.10.2003
(51) Int. Cl.: F16L 9/08, F16L 25/00

(54) **Tubular element for forming pipes for trunk lines, purification plants and sewage systems in general**

(30) Priority: 11.10.2002 IT MI20022163
(71) Applicant: Guidi, Gianmaria, 25134 Brescia (IT)
(72) Inventor: Guidi, Gianmaria, 25134 Brescia (IT)
(74) Representative: Modiano, Guido, Dr.-Ing.

(57) **Abstract**

A tubular element for forming pipes for trunk lines, purification plants and sewage systems in general, which comprises a tubular body (2) provided with elements for connection (3,4) to the tubular body (2) of laterally adjacent tubular elements, a lining (10) being provided on the internal surface of the tubular body. The lining (10) comprises a sheet-like element with an internal reinforcement frame (12) that is connected to a layer (13) of self-sealing thermoplastic polymer that forms the internal surface of the tubular element (21), the sheet-like element forming elements (20) for engaging the internal surface of the tubular body (2).

## Description

The present invention relates to a tubular element for forming pipes for trunk lines, purification plants and sewage systems in general.

As is known, a problem frequently encountered in the provision of pipes for trunk lines, purification plants and sewage systems in general arises from pipe leakage due, for example, to ground subsidence, to failure or displacement of couplings, or to failures due to wear.

Observed damages also show the increasing aggression of industrial and municipal wastewater and consequently show the different types of corrosion to which pipes can be subjected.

If the pipes are located below the water table, water penetration is observed, consequently delivering highly diluted sludge, which accordingly is difficult to process, to purifying systems; if the pipes are located above the water table, sludge leaks out and is responsible for gradual contamination of ground water.

Replacement or conventional repair of damaged sections entails considerable expenditures for intervention and organization, worsened by the inconvenience generated by traffic rerouting.

Considering in particular reinforced concrete pipes, there are several agents that cause deterioration of concrete; these agents can be divided into damage caused by the liquid phase, damage caused by the gaseous phase, and damage caused by the solid phase.

The liquid phase produces an aggression that is particularly dangerous due to the penetration of the chemical aggressive agents in the reinforced concrete, which is always permeable and porous and over time is subject to wear of the rods of the reinforcement frame, with total or partial loss of mechanical integrity of the unit.

The gaseous phase causes carbonation of the concrete due to carbon dioxide, consequently forming rust on the reinforcement frame rods, which increase in volume and generate an outward thrust that very often breaks the conglomerate in which the rods are embedded, causing separations which, over time, produce total degradation of the structure.

The solid phase also causes a mechanical action that is due to solid materials, which tend to apply a continuous abrasive action, consequently decreasing the mechanical strength of the component.

In order to try to solve these problems at least partially, the tubular elements are lined internally with products that are sprayed onto the surface of the concrete, but these solutions have not proved to be optimum, both because it is particularly difficult to achieve firm engagement of the lining on the surface of the concrete and because internal discontinuities inevitably occur at the joining points of the various tubular segments that form the pipe.

In the joining region where the male coupling element and the female or cup-shaped coupling element of the tubular element join, close contact between the surfaces may be obtained, but it is not possible to achieve a perfect joint that forms a continuous pipe; accordingly, inside the pipe there is a lack of continuity, forming a gap that allows stagnation of liquids and accumulation of solid particles, which over time allow chemical aggressive agents to undermine the durability of the structure.

The aim of the invention is to solve the problem described above by providing a tubular element for forming pipes for trunk lines, purification plants and sewage systems in general, in which it is possible to achieve complete lining of the internal surface of the pipe, achieving a constructive continuity that in practice allows to obtain a single internal pipe.

Within this aim, an object of the invention is to provide a tubular element that can have any cross-section, allows to have a region where the various tubular segments join that is integrated in the lining, avoiding the discontinuities that cause stagnation and preventing the concrete or material that constitutes the tubular element from making contact with the conveyed products.

Another object of the present invention is to provide a tubular element that allows to achieve optimum flow of the liquid in the pipe, consequently reducing wear and load losses.

Another object of the present invention is to provide a tubular element in which the internal surface can be easily repaired in case of damage.

This aim and these and other objects that will become better apparent hereinafter are achieved by a tubular element for forming pipes for trunk lines, purification plants and sewage systems in general, according to the invention, comprising a tubular body provided with means for connection to the tubular body of laterally adjacent tubular elements, a lining being provided on the internal surface of said tubular body, characterized in that said lining comprises a sheet-like element with an internal reinforcement frame that is connected to a layer of self-sealing thermoplastic polymer that forms the internal surface of the tubular element, said sheet-like element forming means for engaging the internal surface of said tubular body.

Further characteristics and advantages of the invention will become better apparent from the description of a preferred but not exclusive embodiment of a tubular element for forming pipes for trunk lines, purification plants and sewage systems in general, illustrated by way of non-limitative example in the accompanying drawings, wherein:

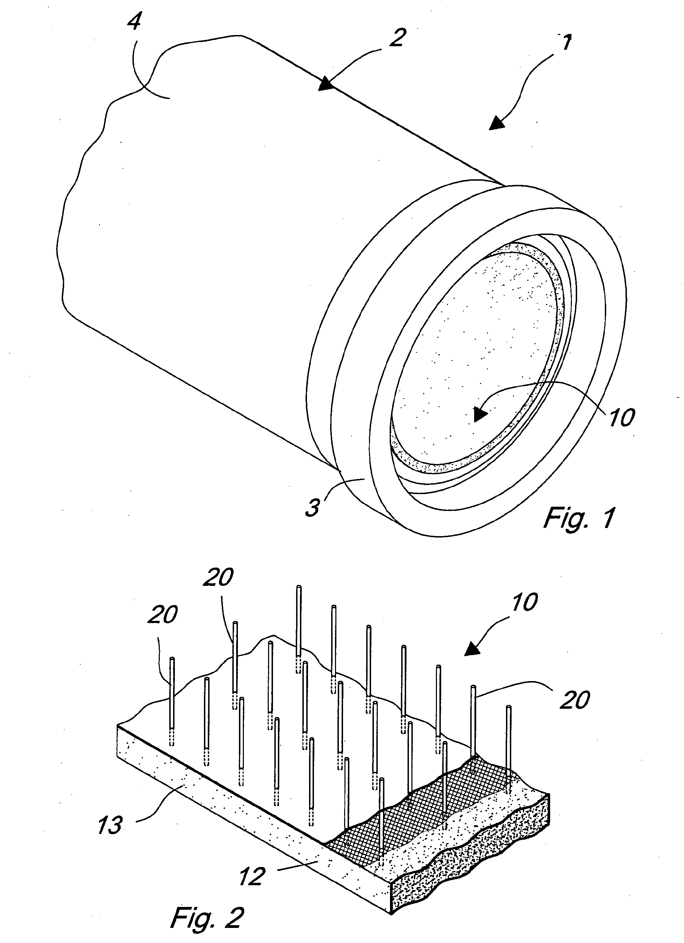

Figure 1 is a schematic perspective view of the tubular element according to the invention;
Figure 2 is a perspective view of a possible embodiment of the lining;

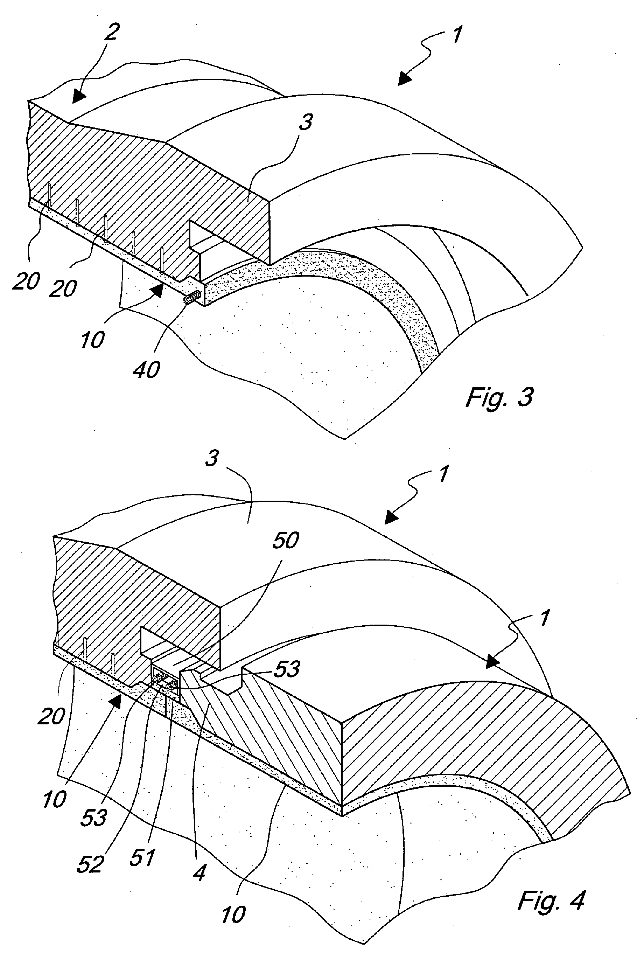

Figure 3 is a partially sectional perspective view of an end of the tubular element, illustrating a lining provided with internal heating means;
Figure 4 is a schematic perspective sectional view of a detail of the end of a tubular element, with an external gasket for connecting the inner linings applied thereto;
Figure 5 is a schematic, cross-sectional view of a mold for providing a lining with integrated heating means;
Figure 6 is a schematic, cross-sectional view of a mold for providing an internal lining without internal heating elements;
Figure 7 is a schematic, cross-sectional view of a mold for providing a lining with engagement elements for facilitating the tensioning of the lining on the inner core of the mold for forming the tubular element;
Figure 8 is a schematic, cross-sectional view of the inner core showing application of the lining thereon, and schematically illustrating a tensioning element;
Figure 9 is a cross-sectional view illustrating the step for casting the concrete onto the lining in order to obtain the tubular element;
Figure 10 is a schematic sectional view of the direct mutual joining of linings with built-in heating means;
Figure 11 is a cross-sectional view illustrating the step for mating linings by means of an external front gasket;
Figure 12 is a cross-sectional view illustrating the step for connection by means of a subsequently applied self-sealing gasket;
Figure 13 is a schematic perspective view of a possible embodiment of a self-sealing gasket;
Figure 14 is a schematic cross-sectional view of an element for repairing the lining;
Figure 15 is a cross-sectional view of the connection of the inner lining by heating means applied from outside;
Figure 16 is a perspective view of the heating means that can be applied from outside;
Figure 17 is a sectional view illustrating the step for joining by heating means that can be interposed from outside;
Figure 18 is a perspective view of the heating means that can be interposed from the outside;
Figures 19, 20 and 21 are cross-sectional views of the various electrical connections of the heating means used for joining;
Figure 22 is a schematic longitudinal, sectional view of a pipe provided by means of a plurality of tubular segments, with the application of a sealing gasket from the inside;
Figure 23 is a sectional view, taken along the line XXIII-XXIII of Figure 22;
Figure 24 is a schematic longitudinal, sectional view of a pipe;
Figure 25 is a longitudinal, sectional view showing the continuity of the internal lining even in case of axial displacement of the various tubular elements.

With reference to the figures, the tubular element for providing pipes for trunk lines, purification plants and sewage systems in general, generally designated by the reference numeral 1, comprises a tubular body 2, which in a per se known manner, has at one end a female or cup-shaped coupling element 3 and, at the opposite end, a male coupling element 4 constituting connection means.

The tubular element can have any shape or cross-section deemed appropriate and it may also be made of the different materials typically used to obtain pipes for trunk lines, purification plants and sewage systems in general.

Reference is explicitly made hereinafter to concrete, but this is not to be understood in a limitative sense.

On the inner surface of the tubular body 2 there is a lining 10, which protects the surface and constitutes, this being a fundamental aspect, a continuity element, since it provides, inside the various tubular elements 1 arranged side by side, a continuous internal duct or pipe that maintains said surface continuity even if possible axial displacements among the various components occur.

The lining 10 is obtained, as shown schematically in Figure 2, by way of a sheet-like element that is provided with an internal reinforcement frame 12, which can be constituted by any element and in particular by a net made of metal or synthetic fibers, by a woven fabric or in any case by any element that forms a supporting surface.

A layer of self-sealing thermoplastic polymer 13 is associated with the reinforcement frame 12 and forms the internal surface of the tubular element.

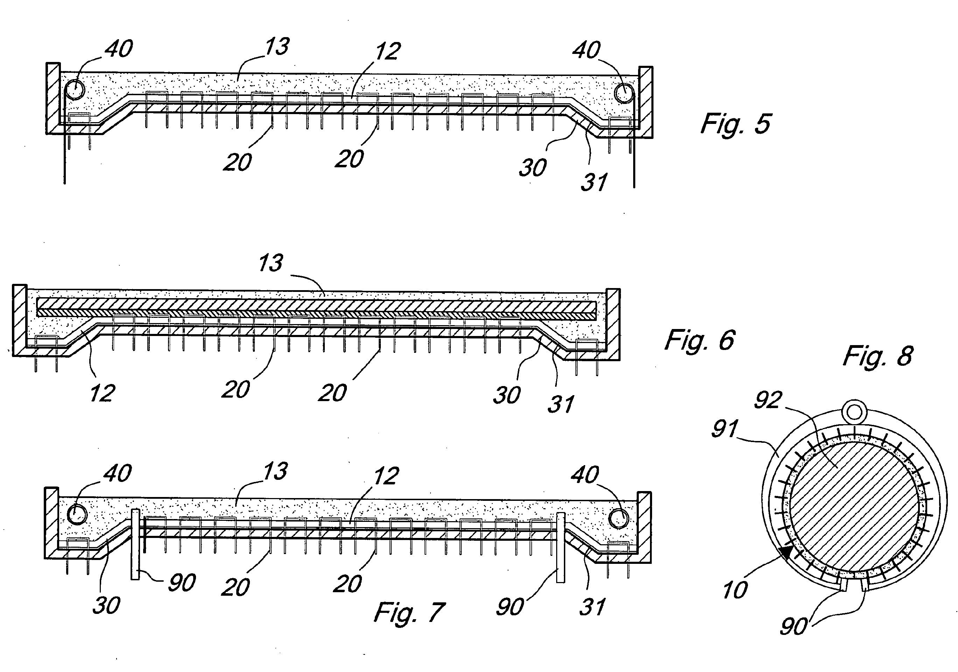

The layer of self-sealing thermoplastic polymer is preferably provided by means of polyolefins modified with acid groups in order to provide polar bonds, such as for example PPA by PLASCOAT, but it is obviously possible to use other materials and it is also possible to use layers of different materials, such as for example polyethylene and polypropylene, as shown schematically in Figure 6.

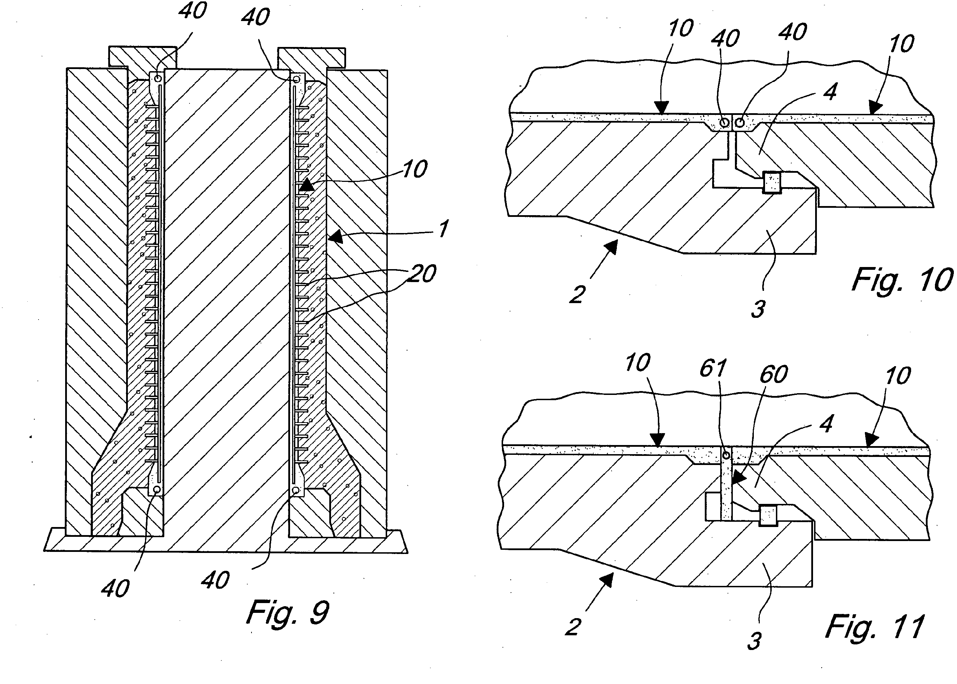

The lining 10, on the surface arranged opposite the one provided with the self-sealing thermoplastic polymer layer, is provided with means for engaging the internal surface of the tubular body; said means can be of various kinds and can be connected in any manner; in the specific example, there are spikes 20 that protrude from the face arranged opposite the one provided with the layer of polymer, can be connected to the reinforcement frame and can in any case be provided so as to form an engagement element, for example for engaging the concrete cast, as shown schematically in Figure 9.

It is also optionally possible to design the engagement means so that they connect to the reinforcement frame of the concrete cast and can be integrated directly, for example in the reinforcement frame, or be constituted by separate elements.

Optionally, the engagement means can be obtained by way of a surface that has been rendered rough or in any case is such as to allow adhesion by interposing materials for adhesion to the internal surface of the tubular element.

The lining element is preferably provided by means of molds 30, which can have a Teflon-coated bottom in order to facilitate separation or optionally require the application of an interface sheet 31, constituted for example by aluminum, which is merely meant to facilitate separation and to prevent the powder that will be heated to form the lining from escaping from the mold through the openings that must be provided for the passage of the engagement means constituted for example by the spikes 20.

It is possible to provide, directly inside the lining, heating means 40 constituted by electrical resistors that are preset to produce localized melting at the edges where it is necessary to join the laterally adjacent flaps, for example in order to provide the tubular element.

It is also optionally possible to provide the lining layer without integrated heating means, which can be applied from the outside or can optionally be arranged in a self sealing gasket 45 that can be applied to the lining 10 by means of external heaters 46; the gasket 45 has a heat diffusion layer 47 of the adhesive or non-stick type, on which a thermoplastic polymer 48 is provided.

There is also a self-sealing and self-heating gasket, designated by the reference numeral 50 and shown schematically in Figure 4, which provides for the presence of a layer of self-sealing thermoplastic material 51 that is applied to a heat diffusion layer 52, constituted for example by micalite or the like, on which there is a heating resistor 53 that is directly integrated in the gasket.

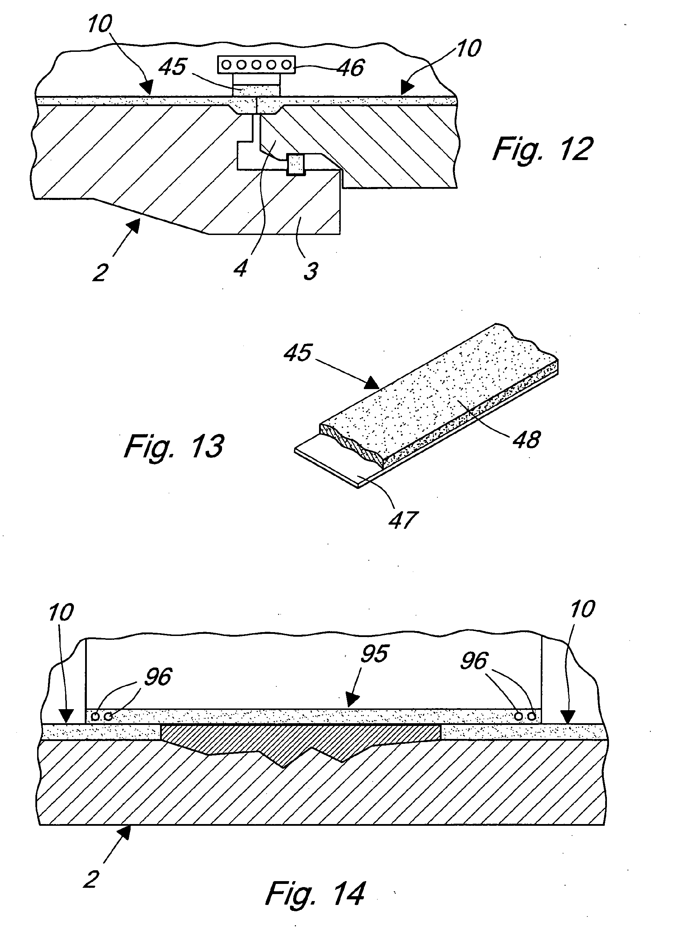

The joints can be provided in various types; thus, for example, as shown in Figure 10, the heating means are arranged directly inside the edge of the lining, while in Figure 11 there is a gasket 60 in which internal heating means 61 are arranged, such heating means being located on the ends of the self-sealing thermoplastic layer of the lining which are to be joined.

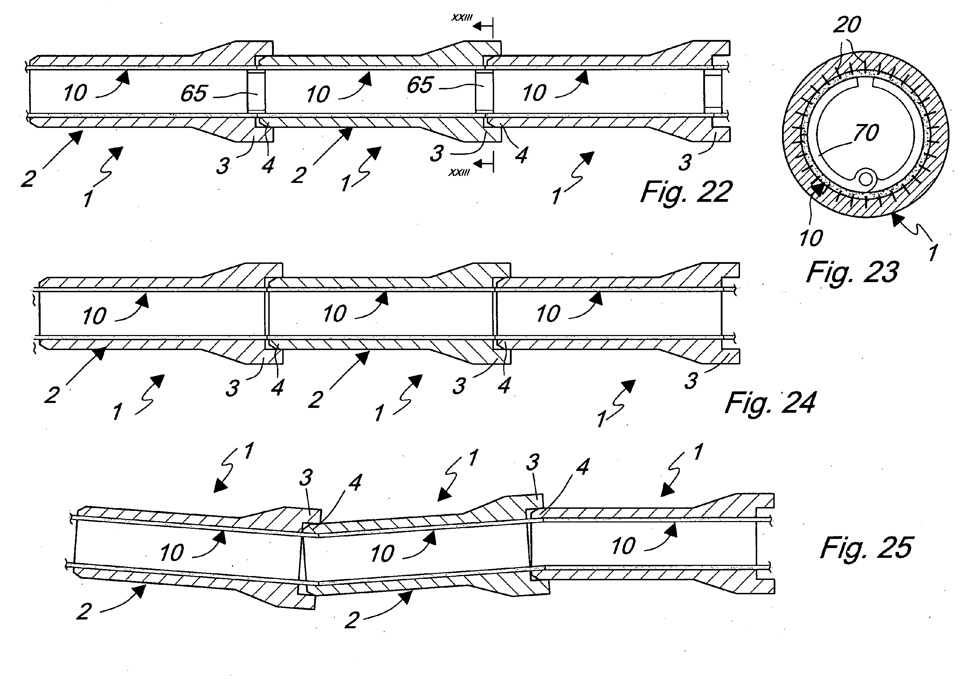

Furthermore, in order to produce the joint, it is possible to provide an internal band 65, as shown schematically in Figure 22, that is kept in position within the tubular element by means of a non-stick spacing element 70 that allows to provide an optimum distribution of the polymer as it melts.

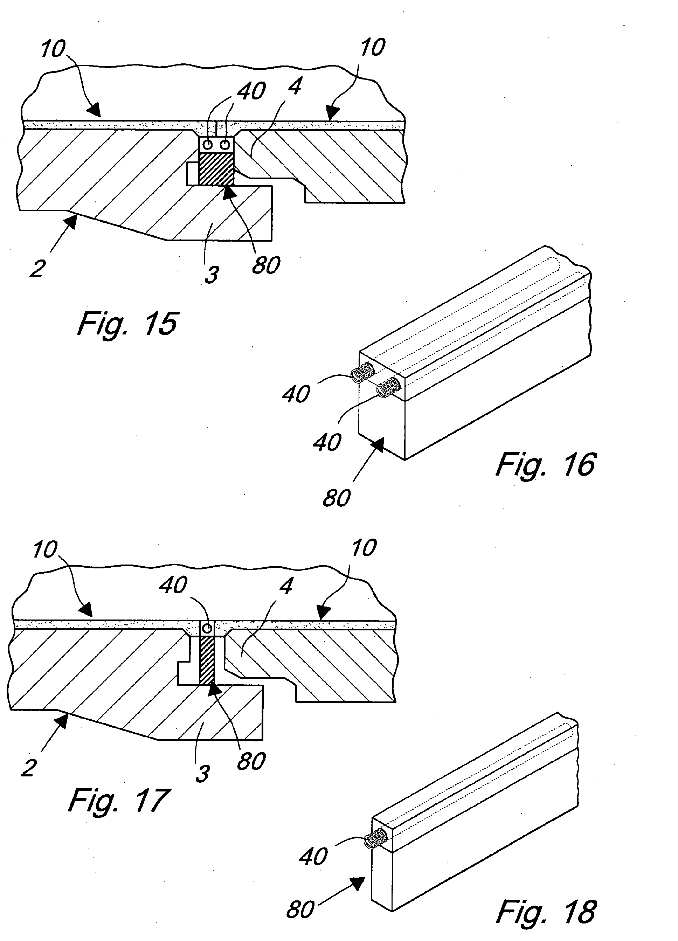

As shown in Figures 15 to 18, it is possible to provide resistors on the gasket elements, designated by the reference numeral 80, which can be arranged externally or be interposed on the reference layer.

In all the embodiments in which the heating means are integrated directly in the lining or in an external gasket, the cables 81 protrude outside, where they have pins for connecting to the electrical power supply that allows to supply the intended voltage in order to obtain the correct melting temperature.

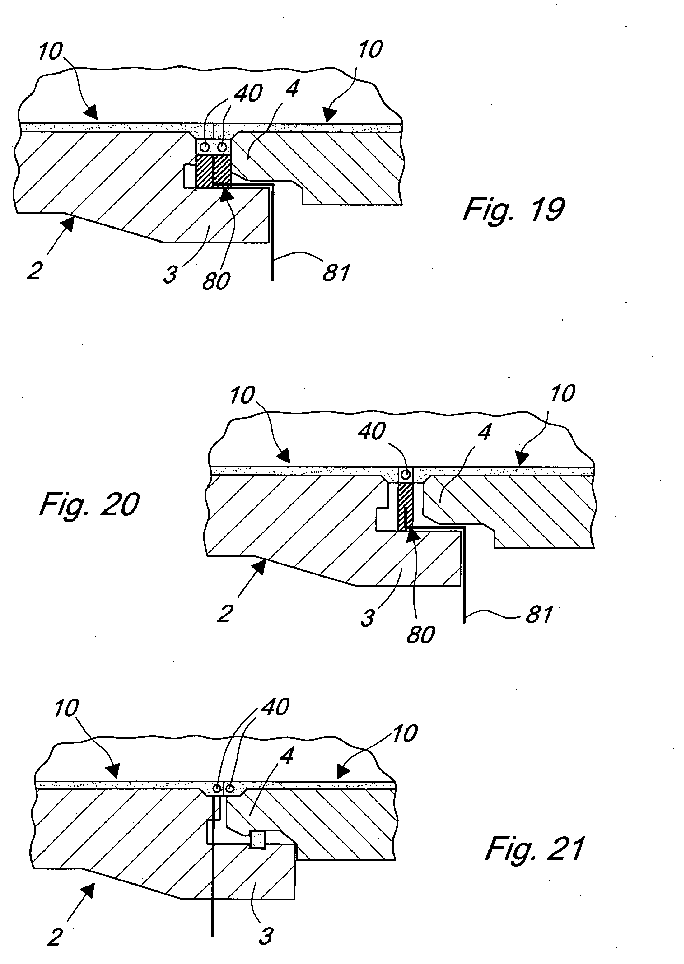

As shown in Figure 21, the power supply cables can pass through the concrete that constitutes the tubular element and form a joining element on outer surface.

In order to facilitate the formation of the tubular shape of the lining, as shown in Figures 7 and 8, it is possible to provide, directly during molding, engagement or coupling elements 90 that are located on the lining element during molding and can engage a tensioning jaw 91 that allows to arrange the lining so that it adheres to the central core 92 that acts as a containment element.

In this manner it is possible to prepare the lining in a tubular shape, achieving a perfect joint at a flap orientated along a direction that is substantially parallel to the axis; after application with the tensioning element to the core, it is possible to apply the gasket 47 or the gasket 50 in order to provide the joining seal.

With reference to Figure 14, a repair lining 95 is shown which is constituted by a lining portion provided with internal or external heating means 96 that affect the peripheral region and optionally also the central region and allow to obtain a localized melting of the thermoplastic polymer for monolithic coupling to a damaged existing layer of thermoplastic polymer.

From the above description it is evident that the invention achieves the intended aim and objects, and in particular the fact is stressed that a solution is provided in which there is a lining made of self-sealing thermoplastic polymer which allows to form on the inner surface of the tubular elements a continuous pipe without any discontinuity, with the additional assurance of precise engagement with the body of the tubular element.

Both the dimensions and the specific shapes, as well as the particular materials used, may in any case be changed according to requirements; moreover, it is possible to use heating means that produce localized melting of the self-sealing thermoplastic polymer and can be embedded directly in the lining layer or can be provided on gaskets that are then embedded at the time of use or optionally on gaskets that allow localized melting of the self-sealing thermoplastic polymer by applying an external heat source.

The invention thus conceived is susceptible of numerous modifications and variations, all of which are within the scope of the appended claims.

All the details may further be replaced with other technically equivalent elements.

It should be added to the above that in the examples of embodiment, the individual characteristics, given in relation to specific examples, may actually be interchanged with other different characteristics that exist in other examples of embodiments.

The disclosures in Italian Patent Application No. MI2002A002163 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tubular element for forming pipes for trunk lines, purification plants and sewage systems in general, comprising a tubular body (2) provided with means (3,4) for connection to the tubular body (2) of laterally adjacent tubular elements, a lining (10) being provided on the internal surface of said tubular body (2), **characterized in that** said lining (10) comprises a sheet-like element with an internal reinforcement frame (12) that is connected to a layer (13) of self-sealing thermoplastic polymer that forms the internal surface of the tubular element (2), said sheet-like element comprising engagement means (20) for engaging the internal surface of said tubular body (2).

2. A tubular element for forming pipes for trunk lines, purification plants and sewage systems in general, comprising a tubular body (2) provided with means (3,4) for connection to the tubular body (2) of laterally adjacent tubular elements, a lining (10) being provided on the internal surface of said tubular body (2), **characterized in that** said lining (10) forms a continuous duct that is monolithically associated with the internal surface of said tubular body.

3. The tubular element according to the preceding claims, **characterized in that** said internal reinforcement frame (12) comprises a net made of metal or of synthetic fibers.

4. The tubular element according to one or more of the preceding claims, **characterized in that** said internal reinforcement frame (12) is provided by a layer of fabric or fibers.

5. The tubular element according to one or more of the preceding claims, **characterized in that** said layer (13) of self-sealing thermoplastic polymer is constituted by polyolefins modified with acid groups in order to form polar bonds.

6. The tubular element according to one or more of the preceding claims, **characterized in that** said layer (13) of self-sealing thermoplastic polymer is provided by the overlap of a plurality of layers of thermoplastic materials that are chemically compatible.

7. The tubular element according to one or more of the preceding claims, **characterized in that** said engagement means (20) are provided on the surface of the lining (10) that lies opposite the surface provided with said layer (13) of self-sealing thermoplastic polymer.

8. The tubular element according to one or more of the preceding claims, **characterized in that** said engagement means comprise spikes (20) that protrude from the face arranged opposite the one provided with said polymer layer (13).

9. The tubular element according to one or more of the preceding claims, **characterized in that** said spikes (20) are connected to the reinforcement frame (12).

10. The tubular element according to one or more of the preceding claims, **characterized in that** said spikes (20) are an integral part of said reinforcement frame (12).

11. The tubular element according to one or more of the preceding claims, **characterized in that** said engagement means (20) can be connected to the reinforcement frame (12) of a concrete cast that constitutes said tubular element.

12. The tubular element according to one or more of the preceding claims, **characterized in that** said engagement means are constituted by a surface that is rendered rough or irregular for adhesion by interposing adhesive materials.

13. The tubular element according to one or more of the preceding claims, **characterized in that** said lining (10) has, on the side from which said engagement means (20) protrude, an interface sheet (31) in order to facilitate separation from a mold (30) for forming the lining.

14. The tubular element according to one or more of the preceding claims, **characterized in that** it comprises heating means (40) integrated within said layer (13) of self-sealing thermoplastic polymer.

15. The tubular element according to one or more of the preceding claims, **characterized in that** it comprises a self-sealing gasket (45) that can be used to join the laterally adjacent flaps of said layer (13) of thermoplastic polymer.

16. The tubular element according to one or more of the preceding claims, **characterized in that** said self-sealing gasket (45) comprises a heat diffusion layer (47) of the adhesive or non-stick type, on at least one face of which there is a self-sealing thermoplastic polymer (48).

17. The tubular element according to one or more of the preceding claims, **characterized in that** it comprises a self-sealing and self-heating gasket (50) that can be arranged on said layer (51) of thermoplastic polymer for the localized melting of said thermoplastic polymer with embedding of said gasket (50).

18. The tubular element according to one or more of the preceding claims, **characterized in that** said lining (10) has a portion that protrudes with respect to the cast that constitutes said tubular body (2), said protruding lining portion being adapted to provide the connection, without discontinuities, to the protruding portion of the lining (10) of a laterally adjacent tubular element.

19. The tubular element according to one or more of the preceding claims, **characterized in that** it comprises an inner gasket band (65) that can be arranged on the internal surface of said lining (10) by means of a spacing element (70) that is adapted to allow localized melting with uniform distribution of the thermoplastic polymer.

20. The tubular element according to one or more of the preceding claims, **characterized in that** it comprises a repair lining (95) that is constituted by a lining portion that is provided with internal or external heating means (96) located at least at the peripheral region in order to overlap an existing lining.

21. The tubular element according to one or more of the preceding claims, **characterized in that** said heating means (40) embedded in said lining (10) have power supply cables (81) that protrude outside for connection to a source of electric power.

22. The tubular element according to one or more of the preceding claims, **characterized in that** said power supply cables (81) pass through the cast that constitutes said tubular body (2).

23. The tubular element according to one or more of the preceding claims, **characterized in that** said lining (10) has, on its outer surface, coupling elements (90) for engaging a tensioning jaw (91) in order to position said lining (10) so that it adheres to a central core (92) which acts as a containment element.
